Europäisches Patentamt

European Patent Office

Office européen des brevets

(11) Publication number: **0 262 784**
**A1**

## (12) EUROPEAN PATENT APPLICATION

(21) Application number: **87307427.2**

(22) Date of filing: **21.08.87**

(51) Int. Cl.⁴: **C08F 2/44 , C08F 20/14**

(30) Priority: **10.09.86 GB 8621796**

(43) Date of publication of application:
**06.04.88 Bulletin 88/14**

(84) Designated Contracting States:
**AT BE CH DE ES FR GB IT LI LU NL SE**

(71) Applicant: **IMPERIAL CHEMICAL INDUSTRIES PLC**
**Imperial Chemical House Millbank**
**London SW1P 3JF(GB)**

(72) Inventor: **Barnard, John**
**17 Hollowhead Avenue Wilpshire**
**Blackburn Lancashire BB1 9LD(GB)**
Inventor: **Rochefort, Malcolm Paul**
**Horndean Ashleigh Street**
**Darwen Lancashire(GB)**

(74) Representative: **Downer, John Michael et al**
**Imperial Chemical Industries PLC Legal**
**Department Patents PO Box 6 Bessemer**
**Road**
**Welwyn Garden City Herts, AL7 1HD(GB)**

(54) **Moulded Articles.**

(57) A moulded article formed from a curable composition comprising at least 20% by volume, preferably at least 35% by volume of at least one finely divided inorganic filler dispersed in a liquid curable composition based on methyl methacrylate wherein the inorganic filler comprises a mixture of at least one particulate filler having a weight average particle size not greater than 50 microns and from 1 to 30% by weight of at least one fibrous filler having an aspect ratio of at least 2 to 1, preferably at least 4 to 1, and wherein the mean length of the fibres does not exceed 200 microns. The presence of the fibrous filler improves the resistance of the moulded article when subjected to stresses caused by extremes of temperature cycling.

EP 0 262 784 A1

## MOULDED ARTICLES

This invention relates to moulded articles formed from dispersions of highly filled, fluid, curable compositions based on methyl methacrylate and to compositions for forming such articles.

Curable compositions suitable for forming moulded articles are well known. For reasons of cost and performance in service these compositions normally contain substantial amounts of filler. Typical compositions are described, for example, in British Patent Specification No. 1 493 393, the disclosure of which is incorporated herein by reference. This specification discloses low viscosity compositions containing at least 20% by volume of finely divided fillers in a state of stably deflocculated dispersion in a polymerisable liquid. A polymeric dispersant is used to obtain the stably deflocculated dispersion. The compositions described are suitable for moulding shaped articles in a process in which the low viscosity dispersion is introduced into a mould and cured under the influence of heat and/or a catalyst to give a shaped article which replicates the shape of the mould. In most of the curable systems described a volume shrinkage occurs as the composition is cured so that it is necessary to make provision for the surfaces of the mould to maintain contact with the composition as it changes from the fluid to the cured state.

Using known moulding techniques it is possible to produce articles having a very high quality surface finish from these compositions, particularly when the polymerisable liquid is a material such as methyl methacrylate. These compositions have found use for shaped articles such as articles of kitchenware and sanitaryware, including wash basins, vanitory unit tops, shower trays and table tops.

The present invention provides a means of improving the properties of articles made from highly filled methyl methacrylate compositions.

According to the present invention there is provided a moulded article formed from a curable composition comprising at least 20% by volume, preferably at least 35% by volume of at least one finely divided inorganic filler dispersed in a liquid curable composition based on methyl methacrylate wherein the inorganic filler comprises a mixture of at least one particulate filler having a weight average particle size not greater than 50 microns and from 1 to 30% by weight of at least one fibrous filler having an aspect ratio of at least 2 to 1, preferably at least 4 to 1, and wherein the mean length of the fibres does not exceed 200 microns.

Techniques for improving the strength of moulded articles are known in which a mat of reinforcing fibres are positioned in the mould cavity prior to filling with a curable composition. In addition to creating an extra step in the fabrication process it can be difficult to locate the mat in the position providing optimum effectiveness, particularly when the article produced is anything other than a flat shape. It is also known that short lengths of reinforcing fibres, for example 3 mm or 6 mm chopped strands of glass fibres can be included in moulding compositions for the purpose of reinforcement. In the context of highly filled moulding compositions based on methyl methacrylate it has not been found possible to incorporate such chopped strands into the compositions because the bundles of filaments in the strands break down into individual filaments resulting in a composition containing balls of entangled filaments. This is a particular problem where the filled methyl methacrylate composition is designed to be redispersible. British Patent 1 493 393 discloses the use of polymeric dispersants to provide a highly filled composition in the form of a fluid, stably deflocculated dispersion. Even after a period of several months when the filler has sedimented the polymeric dispersant provides the capability for redispersing the filler from the sedimented cake by gentle agitation. When such a process is carried out in the presence of chopped reinforcing strands the strands rapidly change into balls of fibre, probably due to the abrasive action of the filler.

The inclusion of the short fibrous fillers according to the invention enables these problems to be avoided. The resulting shaped articles have unexpected levels of properties. In particular the shaped articles have an improved resistance to the stresses induced by successively subjecting the article to water at extremes of temperature (hot/cold cycling). Although the unnotched impact strength is only marginally improved, more significant improvements are obtained in fracture toughness ($G_{IC}$) and critical stress intensity ($K_{IC}$). The fibrous fillers can be conveniently added at the stage of manufacturing the highly filled dispersion so that the fabricator receives a dispersion which is ready to use or requires only mild agitation to reconstitute it into a uniform dispersion.

The ingredients of the curable composition forming the article will include a polymerisable organic liquid based on methyl methacrylate and finely divided particulate inorganic filler. Typically suitable materials are disclosed in British Patent No. 1 493 393. Thus the finely divided organic filler may be characteristically a solid material having a high elastic shear modulus, namely a modulus of not less than 5 GN/m² and preferably not less than 10 GN/m². Alternatively, suitable solid materials may be defined as those having a Knoop hardness of greater than 100. Examples of suitable solids include a wide variety of minerals such as aluminas, forms of silica such as quartz, cristobalite and tridymite, kaolin and its calcination products, feldspar, kyanite, olivine, nepheline syenite, sillimanite, zircon, wollastonite, apatite, aragonite, calcite, magnesite, barytes, gypsum and other metal silicates, aluminates, aluminosilicates, phophates, sulphates, carbonates, sulphides, carbides and oxides; metals, which may be either brittle or ductile, such as cast iron, zinc alloys, aluminium, bronze and steel; and artificial materials such as glasses, porcelain, slag ash and forms of carbon such as coke. Finely divided silicas are particularly suitable.

In stating that the articles of the inorganic filler are finely divided we mean that the average particle size of the filler should not exceed 50 microns. Preferably the average particle size of the fillers is in the range 2 to 50 microns, desirably between 10 and 30 microns. This average particle size is most conveniently determined by sieve analysis and represents a weight average particle size. The values quoted thus represent the sizes at which 50% by weight of material is retained on a sieve of mesh size which allows particles below the quoted size to pass through. In practice this figure (50% retained) is read from a plot of weight fraction retained versus sieve mesh size obtained from measuring the weights retained on a set of sieves of known mesh size.

By "curable compositions based on methyl methacrylate" are meant compositions in which methyl methacrylate is the sole polymerisable monomer present or those in which methyl methacrylate is the major polymerisable component present the remaining comonomers being copolymerisable with methyl methacrylate. The comonomers may be other monofunctional ethylenically unsaturated monomers or copolymerisable polyfunctional monomers which will cross-link the polymer matrix of the composition. Such curable compositions may contain one or more preformed polymers. The preformed polymer or polymers may be either in solution in the monomer constituent or in a state of dispersion therein; the polymer may be either the same as, or different from, the polymer which is produced by the polymerisation of the monomer constituent. Where the preformed polymer is soluble in the monomer constituent, it may be either compatible or incompatible with the polymer produced by the polymerisation of the monomer; it may also be capable of undergoing grafting by the monomer.

It is preferable, although not essential that the curable composition used to form the bulk of the article should contain a polymeric dispersant as described in British Patent Specification No. 1 493 393. The polymeric dispersants described therein are amphipathic substances containing at least one chain-like component of molecular weight at least 500 which is solvated by the polymerisable organic liquid, in the sense that, if this component were an independent molecule, the polymerisable liquid would be significantly better than a theta-solvent for it; the nature of a theta-solvent is discussed in "Polymer Handbook" (Ed. Brandrup and Immergut, Interscience, 1966) and in "Principles of Polymer Chemistry", Chapters 12 - 14, (Flory: Cornell, 1953). More simply, the polymerisable liquid may be described as being a "good solvent for the chain-like component. In addition, the dispersant contains one or more groupings which are capable of associating with, and effecting anchoring to, the particles of the inorganic filler.

It is also preferred, but not essential, for there to be present low molecular weight coupling agents which will couple the filler to the polymer matrix. The coupling agent should contain one or more groups capable of interacting with groups in the inorganic material, and also one or more groups which can copolymerise with, or otherwise graft on to, the polymer forming the matrix in the finished composite material. In using a low molecular weight bonding agent of this type, care must be taken that the bonding agent is, like the polymeric dispersant, present at the interface between the two species to be bonded; this requires that the proportions of dispersant and bonding agent used should be controlled so that neither individually achieves saturated coverage of the particle surface, thus leaving no space for the other agent to become adsorbed. Suitable coupling agents are in general substances containing groups which can form a multiplicity of ionic, covalent or hydrogen bonds with the particle, and also groups which can react to form bonds with the polymer matrix. Suitable groups for bonding to particles having hydroxylic, metal oxide or silicaceous surfaces are, for example, the oligomeric hydrolysis products of alkoxy silanes, chlorosilanes and alkyl titanates as well as the trivalent chromium complexes of organic acids.

The fibrous material having an aspect ratio of at least 2:1 and a mean length less than 200 microns is preferably a glass fibre because of their ready availability as milled glass fibres. Glass fibres can be produced in a variety of fibre diameters but are generally available having diameters in the range 5 to 30 microns. Any of these materials are suitable for milling to the required length. It is preferred that the mean length is less than 150 microns but greater than 30 microns. Although the fibres may carry a variety of size treatments and adhesion promoting additives such as silanes it is generally unnecessary to use fibres which have been treated in this because any necessary additives can be added to the filled curable dispersion. Fibrous materials other than glass fibres, such as wollastinite may be used.

The quantity of fibrous material present is preferably less than 30% by weight because higher concentrations lead to mouldings in which the surface properties are visually less aesthetically attractive because of the presence of significant numbers of fibres at the surface of the moulding. Only relatively low levels of fibres need be used to produce an improvement in fracture toughness. The preferred range of concentration is 3 to 20% by weight of the curable composition.

The problem of fibre show-through at the surface can be avoided by the procedure of providing the moulding with a coating on at least pre-selected areas of the moulding by the technique of applying a suitable coating material to at least one of the mould halves prior to closing the mould and filling it with a composition according to the invention. Such procedures are described for example, in European Patent Publication No. 61245. In the context of the present invention the coating material, if used, should be free of fibrous filler and should also be of a curable composition based on methyl methacrylate.

In essence the composition for use in moulding articles according to the invention comprises a filled, curable composition comprising at least 20%, preferably at least 35% by volume of a finely divided inorganic filler dispersed in a curable composition based on methyl methacrylate wherein the filler comprises a mixture of at least one particulate filler having a weight average particle size not greater than 50 microns and from 1 to 30% by weight of at least one fibrous filler having an aspect ratio of at least 2:1, preferably at least 4:1 and wherein the mean length of the fibres does not exceed 200 microns.

The curable compositions may incorporate dyestuffs of pigments. These constituents may be dissolved or dispersed in the complete mixture of the polymerisable liquid, the finely divided inorganic filler and/or the polymeric dispersant, or, in the case of pigments, they may be added to that mixture as a preformed dispersion in the polymerisable liquid which has been prepared with the aid of a suitable pigment dispersant.

The process of forming the shaped articles from the composition comprises moulding a shaped article from a filled, curable composition in which a composition containing at least 20% by volume of finely divided inorganic material dispersed in a curable composition based on methyl methacrylate is cured in a mould comprising at least two mould parts defining a cavity characterised in that the filled, curable composition contains from 1 to 30% by weight of at least one fibrous filler having an aspect ratio of at least 2:1 and wherein the mean length of the fibres does not exceed 200 microns.

The curable compositions will generally require initiators to ensure sufficiently fast cure rates to provide commercially useful cycle times for article productions.

The invention is further described with reference to the following examples.

## EXAMPLE 1

A coloured, curable composition of fine silica in methacrylate was prepared following the procedure given in Example 5 of British Patent Specification 1 493 393, with the addition of 1% by weight of pigments based on titanium and iron oxides dispersed in dibutyl phthalate and catalyst (Perkadox 16 *) at 0.6% by weight.

A milled glass fibre supplied as EMF 1629 by T-Glass Fibres Ltd and having a mean fibre length of 70 micron was added to this composition at the concentrations listed in the table below.

The milled fibre was incorporated by rolling the dispersion containing the added fibre.

A kitchen sink mould was used to evaluate the compositions listed. The mould half providing the show surface of the sink was maintained at 80°C whilst the backing mould surface was maintained at 50°C. The composition was injected into the mould and the temperatures of the mould surfaces were then progressively raised so that after 10 minutes, the temperatures of both moulds were 85°C. The mould temperatures were then progressively raised over the next 10 minutes so that both moulds were at 100°C. The composition was substantially completely polymerised at this time but a post-cure period of 10 minutes at 100°C was used to complete the cycle. For each composition used the cured article removed from the mould was found to have a good surface finish with no evidence of fibre showing through the surface.

* 'Perkadox 16' is bis-(4-t-butyl cyclohexyl) peroxy dicarbonate (supplied by Akzo Chemie bv). 'Perkadox' is a registered trade mark.

The properties of the moulding were tested for hot/cold cycle water resistance in a test in which a jet of water 90-95°C was played on a portion of the sink carrying the spray coated surface for 90 seconds. The flow rate of the jet was 6 litre/min and the outlet for the jet was 20 cm above the sink area under test. The water was pumped from the sink continuously. After 90 seconds the sink was allowed to stand at rest for 30 seconds before playing cold water (10-15°C) on the same area for 90 seconds using the same jet and flow rate. The water was pumped away continuously. After allowing to stand for 30 seconds the cycle was repeated. Cycling was continued until a crack appeared in the sink.

The fracture toughness and critical stress intensity were measured using a 3 point bend test at a speed of 5 mm/min and at a temperature of -65°C.

The results obtained are tabulated below.

| Concentration of milled fibre (% by wt) | Fracture Toughness $(G_{IC})$ $(KJ/m^2)$ | Critical Stress Intensity $(K_{IC})$ $(MN/m^{3/2})$ | Water Cycling (cycles) |
|---|---|---|---|
| 0 | 0.30 | 1.86 | ⪅ 400 |
| 5 | 0.36 | 2.03 | − |
| 10 | 0.42 | 2.20 | ⪆ 1500 |

EXAMPLE 2

A composition was prepared as described in Example 1 except in that 10% by weight of the particulate silica filler present was replaced by 10% by weight of a milled glass fibre obtained from T-Glass Fibres Ltd having the designation XG2011. The mean fibre length of the fibres was 100 microns and mean fibre diameter was 12 microns. The glass fibres were sized with γ-methacryl oxypropyl trimethoxy silane. A sink was prepared from this composition as described in Example 1 and subjected to the following hot/cold water cycle test.

90 secs water at 90° ± 2°C

30 secs pause

90 secs water at 14 ± 2°C

30 secs pause

The water flow rate was 2 litre/min and the outlet of the jet was 27 cm above the centre of the sink bowl. The sink failed after about 4700 cycles. A number of sinks prepared without the milled glass fibre present (replaced with an equivalent weight of silica as used in Example 1) withstood between 2000 and 2500 cycles before failure.

**Claims**

1. A moulded article formed from a curable composition comprising at least 20% by volume of at least one finely divided inorganic filler dispersed in a liquid curable composition based on methyl methacrylate wherein the inorganic filler comprises a mixture of at least one particulate filler having a weight average particle size not greater than 50 microns and from 1 to 30% by weight of at least one fibrous filler having an aspect ratio of at least 2 to 1, and wherein the mean length of the fibres does not exceed 200 microns.

2. A moulded article according to claim 1 wherein the finely divided inorganic filler comprises from 3 to 20% by weight of fibrous filler.

3. A moulded article according to either of claims 1 or 2 wherein the mean fibre length of the fibrous filler is between 30 and 150 microns.

4. A moulded article according to any one of claims 1 to 3 in which the liquid curable composition comprises at least 35% by volume of finely divided inorganic filler.

5. A moulded article according to any one of claims 1 to 4 carrying a coating free from fibrous filler and being formed from a curable composition based on methyl methacrylate.

6. A filled, curable composition comprising at least 20%, by volume of a finely divided inorganic filler dispersed in a curable composition based on methyl methacrylate wherein the filler comprises a mixture of at least one particulate filler having a weight average particle size not greater than 50 microns and from 1 to 30% by weight of at least one fibrous filler having an aspect of at least 2:1, preferably at least 4:1 and wherein the mean length of the fibres does not exceed 200 microns.

7. A filled curable composition according to claim 6 wherein the finely divided inorganic filler comprises from 3 to 20% by weight of fibrous filler.

8. A filled curable composition according to either of claims 6 or 7 in which the mean fibre length of the fibrous filler is between 30 and 150 microns.

9. A process of forming shaped articles from a filled, curable composition comprising moulding a shaped article from a filled, curable composition in which a composition containing at least 20% by volume of finely divided inorganic material dispersed in a curable composition based on methyl methacrylate is cured in a mould comprising at least two mould parts defining a cavity characterised in that the filled, curable composition contains from 1 to 30% by weight of at least one fibrous filler having an aspect ratio of at least 2:1 and wherein the mean length of the fibres does not exceed 200 microns.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| D,A | GB-A-1 493 393 (I.C.I.) ----- | | C 08 F 2/44 <br> C 08 F 20/14 |

**TECHNICAL FIELDS SEARCHED (Int. Cl.4)**

C 08 F

The present search report has been drawn up for all claims

| Place of search | Date of completion of the search | Examiner |
|---|---|---|
| THE HAGUE | 05-01-1988 | CAUWENBERG C.L.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)